# EUROPÄISCHE PATENTSCHRIFT

(11) **EP 0 683 240 B1**
(45) Veröffentlichungstag und Bekanntmachung des Hinweises auf die Patenterteilung: **23.05.2001**
(21) Anmeldenummer: 95104179.7
(22) Anmeldetag: 22.03.1995
(51) Int. Cl.: C22C 32/00, C22C 1/10

(54) **Verfahren zur Herstellung von mit Yttriumoxid dispersionverfestigten Reinst-Platin-Werkstoffen, Halbzeugen und Blechen**
Process for preparing Yltrium oxide dispersion hardened pure platinum material, workpieces and plates
Procédé de préparation de matériaux, ébauches et tôles en platine pure renforcée par dispersion d'oxyde d'Yltrium

(30) Priorität: 19.05.1994 DE 4417495
(43) Veröffentlichungstag der Anmeldung: 22.11.1995
(73) Patentinhaber: Schott Glas, 55122 Mainz (DE); CARL-ZEISS-STIFTUNG trading as Schott Glas, 55122 Mainz (DE)
(72) Erfinder: Disam, Joachim, Dr., D-55278 Hahnheim (DE); Jangg, Gerhard, Prof. Dr., A-1230 Wien (AT); Zbiral, Johannes, Dr., A-1200 Wien (AT); Schreier, Gerhard, Dr., A-2700 Wiener Neustadt (AT); Edtmaier, Christian, Dr., A-1040 Wien (AT)

(56) Entgegenhaltungen:
- WO-A-81/00977
- FR-A- 2 171 659
- GB-A- 645 541
- GB-A- 2 023 667
- US-A- 3 738 817

## Beschreibung

Die vorliegende Erfindung bezieht sich auf ein Verfahren zur Herstellung von feinteiligem Platinpulver hoher Reinheit zur Herstellung von mit Y₂O₃ dispersionsverfestigten Reinst-Platin-Werkstoffen hoher Festigkeit und Dehnungsfähigkeit auch im Temperaturbereich > 800 °C aus diesem Platinpulver, durch mechanisches Legieren und auf die Herstellung von Halbzeugen und Blechen daraus.

Die Dispersionsverfestigung ist im Vorliegen von feinen (< 1 µm), gleichmäßig verteilten Teilchen, die in der Matrix auch bei hohen Temperaturen unlöslich sind, begründet.

Die Verfestigung wird durch verschiedene Einzelmechanismen verursacht. Die Streckgrenze setzt sich zusammen aus der Grundfestigkeit des reinen Matrixmetalles, der Verfestigung durch Mischkristallbildung, dem Beitrag der Korngrößenhärtung, dem Härtungsbeitrag durch Versetzungsdichte und dem Härtungsbeitrag durch Dispersoide.

Der Grad der Verfestigung durch Dispersoide ist vom Dispersoid-Teilchenabstand abhängig und demnach von der Dispersoidkorngröße und seinem Anteil.

Festigkeit (Rₘ) und Dehnung (A) stehen im Allgemeinen in einer Beziehung, d. h. hohe Festigkeiten sind mit geringeren Dehnungen gekoppelt.

Für Werkstoffe mit gleicher Matrix existiert eine "Grenzkurve" für optimale Festigkeit/Dehnungs-Verhältnisse.

Werte-Paare für Rₘ und A, die unterhalb dieser Grenzkurve liegen, weisen auf ein nicht ideales Werkstoffgefüge hin.
Aus dem Rₘ/A-Verhältnis kann ein "Qualitätsfaktor" abgeleitet werden.

Dispersionsverfestigte Werkstoffe sind praktisch nur über pulvermetallurgische Verfahren herstellbar. Für die Herstellung von dispersionsverfestigten Werkstoffen sind folgende Verfahren verfügbar:
a) Mischen genügend feiner Matrixpulver mit entsprechend feinen Dispersoidpulvern.
b) Zumischen von Metallsalzen zu den Matrixpulvern und Glühen der Pulvermischung, wobei die Salze zu oxidischen Dispersoiden umgewandelt werden.
c) Innere Oxidation: Das Unedelmetall einer pulvrigen Mischkristalllegierung wird geglüht, wobei das Unedelmetall zum Dispersoid oxidiert wird.
d) Mechanisches Legieren: Einmahlen der Dispersoide in die pulvrige Matrix.

Anschließend müssen die so erhaltenen Mischungen kompaktiert werden, damit sie zu Halbzeugen verarbeitet werden können.

Aus der Literatur ist die elektrolytische Pulverherstellung bekannt.
Zum Auflösen und Reinigen des Pt-Metalles bzw. Pt-Schrottes wird hier eine Anlage benutzt, die auf dem Prinzip der Membranelektrolyse beruht.
Bei bestimmten elektrochemischen Bedingungen ist die Membran semipermeabel für Platin, so daß ein Raffinationsprozeß stattfindet, der zu reinem Platin führt.
Lösemedium ist dabei eine verdünnte Salzsäure (1:1).
In einer solchen Anlage können ca. 5 kg Platin-Metall-Schrott pro Tag gelöst werden.
Die Pulverherstellung erfolgt in einer elektrochemischen Zelle, deren Anoden-und Kathodenraum durch ein Glasdiaphragma getrennt sind. Die Pulverabscheidung findet an der vibrierenden Kathode statt.

Mit dieser Methode können Korngrößen zwischen 5 und 10 µm hergestellt werden.

Sollen Korngrößen von < 5 µm und Reinheiten des Pt-Pulvers von 99,95 % erreicht werden, ist diese Vorgehensweise jedoch nicht vorteilhaft.

Als weiterer technologischer Hintergrund sind in diesem Zusammenhang die WO-A 81/00977 und die FR-A-2.171.659 zu nennen.

Die WO-A-81/00977 hat ein Verfahren zur Herstellung von dispersionsverfestigten Edelmetall-Legierungen zum Gegenstand die eine Dauerstandsfestigkeit aufweisen sollen, die besser ist als bei allen bisher bekannten dispersionsverfestigten Platin-Legierungen.
Bei diesem Herstellungsverfahren werden die Edelmetallpulver und die Zusätze zur Dispersionsverfestigung zusammen mechanisch legiert.
Die mechanische Legierung erfolgt dabei mit Hilfe von Hochleistungs-Kugelmühlen um die für den Prozess notwendige, möglichst enge mechanische Vermischung der Komponenten zu erzielen.
Die Oxid-Partikel werden dabei in die Edelmetall-Partikel, die die Matrix bilden, geschmiedet.

Das französische Patent FR 2.171.659 beschreibt einen neuen schweiß- und lötbaren Werkstoff auf Basis von Platin der in feinteiliger Form 0,005 bis 0,20 Gew.-% Yttriumoxid enthält.

Dieser Werkstoff wird typischerweise mit folgenden Verfahrensschritten hergestellt:
- Vermischen eines platinhaltigen, sehr reinen Salzes und einer yttriumhaltigen Lösung
- Eindampfen der Flüssigkeit und Trocknen des Rückstandes
- Brennen des festen Rückstandes bei etwa 900 °C um ein feinteiliges Pulver zu erhalten
- Verpressen dieses feinteiligen Pulvers mit hohem Druck und unter Vakuum bei etwa 1500 °C zum Endprodukt.

Gegenstand der Erfindung ist die Herstellung von dispersionsverfestigten Platin-Werkstoffen aus einem geeigneten Platinpulver, deren Reinheit und Festigkeit den hohen Anforderungen der Glasindustrie für diese Werkstoffe zur Fertigung glasführender Konstruktionselemente bei der Herstellung technischer und optischer Gläser genügen.

Dispersionsverfestigte Metalle sind, wie oben gesagt, Metalle, in deren Matrix fein verteilt thermisch sehr stabile, keramische Teilchen eingelagert werden, die speziell bei hohen Einsatztemperaturen zu einer deutlichen Steigerung der Werkstofffestigkeit, verglichen mit dem nicht verfestigten Reinmetall führen.
Die Forschung und Entwicklung im Bereich der dispersionsverfestigten Werkstoffe hat auf dem Gebiet der Nickel- bzw. Eisenbasislegierungen bereits zu kommerziellen Werkstoffen geführt. Die dabei verwendete Herstellungstechnologie ist bekannt, aber auf Platin-Werkstoffe nicht zu übertragen, da sie zu unzulässigen Werkstoffverunreinigungen führen würde.

Für glasführende Konstruktionselemente bei der Herstellung von Spezialgläsern wird der Einsatz von Bauteilen, die aus reinem Platin gefertigt sind, angestrebt.
Platin-Werkstoffe mit hoher Reinheit werden deswegen bevorzugt, weil Platin als einziges Metall die optischen Eigenschaften der darin erschmolzenen Gläser bezüglich der Transmission und der Färbung nicht beeinträchtigt.
Unlegiertes Platin kann in der Glasindustrie aber nur beschränkt eingesetzt werden, da die Festigkeit bei hohen Temperaturen, wie sie während der Glasherstellung auftreten, zu gering ist.
Die üblichen Verfestigungsmethoden metallischer Werkstoffe wie z. B. Mischkristallverfestigung, Ausscheidungshärtung und Kaltverfestigung sind im Falle von Platin-Werkstoffen für glasführende Bauteile aber nicht durchführbar:

Die Kaltverfestigung geht bereits bei Einsatztemperaturen über 600 °C verloren, Mischkristallverfestigung und Ausscheidungshärtung sind nicht möglich, da die Legierungselemente die Glasqualität negativ beeinflussen würden.

Aufgrund seiner Festigkeit bleibt daher der Einsatz von Platin in Konstruktionsbauteilen auf Temperaturen unter 800 °C beschränkt.

Aufgabe der Erfindung ist es, ein relativ einfaches Verfahren zur Herstellung von Platin-Werkstoffen aus geeigneten feinteiligem Platinpulver hoher Reinheit zur Verfügung zu stellen, die bei deutlich höheren Temperaturen als 800 °C risikofrei als Konstruktionselemente einzusetzen sind, dazu eine Reinheit von > 99,90 %, Zugfestigkeiten von Rₘ > 300 MPa und Dehnungsfähigkeiten A von mindestens 15 % aufweisen, und die allen Anforderungen der Glasverarbeiter für den Einsatz in glasführenden Bereichen bei der Herstellung optischer Gläser vollkommen genügen.

Des weiteren ist es Aufgabe der vorliegenden Erfindung ein Verfahren zur Herstellung von Halbzeugen und Blechen aus diesem dispersionsverfestigten Platin, unter Beibehaltung der Material- und Werkstoffeigenschaften vorzustellen.

Die Aufgabe wird nach der Erfindung durch die Merkmale der im kennzeichnenden Teil der Ansprüche 1 und 2 genannten Verfahrensschritte gelöst. Das erfindungsgemäße Verfahren gliedert sich dabei in die Teilschritte:
- Herstellung von Platinpulvern hoher Reinheit und geringer Korngröße sowie
- die pulvermetallurgische Verarbeitung zum dispersionsverfestigten Platin-Halbzeug.

Ausgangspunkt für die Herstellung der Platin-Feinstpulver ist eine salzsaure Lösung von Platin, wie sie etwa durch elektrolytische Verfahren oder durch das Lösen von Platin im siedendem Königswasser gewonnen werden kann. Der Verfahrensablauf zur Herstellung von feinsten, hochreinen Platinpulvern aus Platinlösungen besteht aus mehreren Teilschritten, die im folgenden ausführlich und beispielhaft dargestellt werden.

### Vorbereitung der Lösung auf die Fällung:

Zunächst wird die Lösung eingedampft, bis eine Konzentration von etwa 400 g Pt/l erreicht wird.
Sofern die Pt-Lösung durch Auflösung von Platin in siedendem Königswasser gewonnen wird, müssen die Stickoxide vollständig ausgetrieben werden, was unter mehrmaliger Zugabe kleiner Mengen von Salzsäure erfolgt.
Danach wird die Lösung weiter eingeengt, bis eine Siedetemperatur von etwa 180 °C erreicht wird, damit evtl. vorhandenes Iridium in die dreiwertige Form überführt wird. Nur in dieser Form fällt Iridium beim nachfolgenden Fällungsschritt nicht aus.
Unterbleibt das Einengen der Lösung bei dieser Temperatur, so wird beim Fällen ein iridiumhaltiger Platin-Niederschlag ausgefällt, der nicht die geforderte Reinheit auch bei der Weiterverarbeitung zu Halbzeugen nach der erfindungsgemäßen Technologie für optische und technische Anwendungen aufweist.
Die beim Einengen bis auf eine Siedetemperatur von 180 °C erreichte Pt-Konzentration in der Lösung beträgt etwa 1500 g Pt/l.
Danach wird die Lösung noch im heißen Zustand mit H₂O aufgenommen und auf 600 g Pt/l verdünnt. Dieser Verfahrensschritt führt zu einem Platinkonzentrat, das lagerungsfähig ist, d. h. das bei längerer Lagerungsdauer keine Zersetzungsreaktionen und Umwandlungen zeigt.
Da die folgende Fällung im sog. Batch-Betrieb durchgeführt wird, muß die Platin-Lösung lagerungsfähig sein.

### Fällungsvorgang:

Die Fällung erfolgt durch Zugeben einer Pt-Lösung zu einer in einer Fritte vorgelegten Ammoniumchloridlösung unter intensivem Rühren. Dabei bildet sich ein Pt-Niederschlag (NH₄)₂ [PtCl₆] nach folgender Reaktionsgleichung:

H₂[PtCl₆] + 2 NH₄Cl (NH₄)₂[PtCl₆] + 2 HCl

Wesentlich zur Gewährleistung einer hohen Produktreinheit ist, daß die angegebenen Konzentrationen und Temperaturen der Pt-Lösung und der Ammonchlorid (NH₄Cl)-Lösung genau eingehalten werden:
Pt-Lösung: Konzentration 150 - 200 g/l, Temperatur 80 °C
NH₄Cl-Lösung: Konzentration 30 % (300 g NH₄Cl/l), Temperatur 80 °C.

Unmittelbar nach erfolgter Fällung wird die Reaktionsflüssigkeit möglichst schnell abgesaugt. Der Platin-Niederschlag ist aufgrund der Fällungstemperatur relativ grob, von gelb-oranger Farbe und gut filtrierbar.
Beim Absaugen der Reaktionslösung ist darauf zu achten, daß sich im Filterkuchen keine Risse bilden, da sonst Reste der Reaktionslösung, die Verunreinigungen enthalten kann, im Niederschlag verbleiben.

Für die Fällung, während der die Platin-Raffination, also das Abtrennen von Verunreinigungen und damit die Herstellung eines hochreinen Ausgangsmaterials für die Platin-Pulverherstellung erfolgt, wurde eine Fritte konstruiert, mit der es möglich ist, die Ammoniumchlorid-Lösung vorzulegen, und danach unter intensivem Rühren mit einem Blattrührer die Platin-Lösung zuzugeben.
Diese Vorgehensweise führt zu einem raschen und vollständigen Ausfällen des Platin-Niederschlags, wobei das Mitausfallen von verunreinigenden Beimetallen vermieden wird.
Des weiteren erlaubt die beschriebene Vorgehensweise die Herstellung von hochreinen Platin-Niederschlägen.
Es kann daher nach der Erfindung auch Platin-Schrott, der sonst nur der Scheidung zugeführt werden kann, zu hochreinem Platin-Pulver umgearbeitet werden.

### Waschen und Entwässern des Platin-Niederschlags:

Das Auswaschen des Platin-Niederschlags erfolgt mit verdünnter, kalter NH₄Cl-Lösung (15%-ig ≈ 150 g/l) in mehreren Waschschritten.

Gelingt es, daß der Filterkuchen aus Platin-Niederschlag nicht trockenfällt, wandert die obere Front der Reaktionsflüssigkeit gleichmäßig durch den Filterkuchen, wodurch die Verunreinigungen vollständig entfernt werden.

Damit sich keine Trockenrisse bilden, ist darauf zu achten, daß ständig eine gewisse Menge an Waschlösung über dem Filterkuchen verbleibt.

Wenn die Waschlösung farblos austritt, wird die NH₄Cl-Lösung 15 Minuten lang abgesaugt.

Das restliche Wasser, das noch im Filterkuchen enthalten ist, wird durch Waschen mit Aceton entfernt. Tritt das durchgesaugte Aceton milchig-trübe aus, so ist das Wasser vollständig entfernt. Es wird dann weitere 30 Minuten abgesaugt.

Es ist von entscheidender Bedeutung, daß das Wasser möglichst vollständig aus dem Platin-Niederschlag entfernt wird, da bereits geringfügige Reste bei der nachfolgenden thermischen Zersetzung des Niederschlags zu Platin-Pulver stören.
Wird nämlich ein wasserhaltiger Niederschlag thermisch zersetzt, so bilden sich grobe, verfilzte Platin-Pulver.
Darüber hinaus führen Gasphasenreaktionen zur Entstehung eines Platin-Spiegels an den Bauteilen des Zersetzungsofens, was einerseits zu einem erhöhten Wartungsaufwand führt, andererseits aber auch die Platin-Verluste über die Gasphase wesentlich erhöht.

### Thermische Zusammensetzung:

Die thermische Zersetzung des gefällten und gewaschenen Platin-Niederschlags zu Platin-Pulver erfolgt in einem Muffelofen, der eine Glasmuffel mit Absaugstutzen für die bei der Zersetzung entstehenden Gase aufweist. Dabei ist eine Glasmuffel notwendig, da korrosive Abgase entstehen, die den Einsatz einer Metallmuffel verbieten.

Der Zersetzungsvorgang beginnt bei 380 °C, wobei eine Temperaturerhöhung die Zersetzungsgeschwindigkeit erhöht, aber auch zu gröberen und verfilzten Platin-Pulvern führt. Wesentlich ist es, die Temperatur so einzustellen, daß ein feines, d. h. mit einer mittleren Korngröße von 2 - 5 µm, und vollständig zersetztes Platin-Pulver entsteht das keine unzersetzten Niederschlagsreste enthält. Dies gelingt, wenn Zersetzungstemperaturen zwischen 380 und 420 °C eingehalten werden.

Bei höheren Temperaturen wird ein deutlich gröberes Platin-Pulver erhalten, das für die weitere pulvermetallurgische Verarbeitung zu dispersionsverfestigten Platin-Halbzeugen nicht geeignet ist.

### Auswaschen des Platin-Pulvers:

Nach der thermischen Zersetzung wird der bei der Zersetzung aus dem gefällten Platin-Niederschlag entstandene Platin-Schwamm zerstoßen und mit destilliertem Wasser mehrmals ausgekocht.
Der Platin-Schwamm zerfällt dabei in ein feines Pulver, das den Anforderungen der pulvermetallurgischen Verarbeitung zu dispersionsverfestigten Platin-Halbzeugen vollkommen genügt.
Das Wasser wird danach abgesaugt, das noch feuchte Platin-Pulver im Trockenschrank bei 100 °C bis zur Gewichtskonstanz getrocknet.

### Einbringen und Verteilen der Dispersoide:

Das Einbringen und Verteilen der Dispersoide nach der Erfindung erfolgt auf dem Weg des Pulvermahlens.
Dabei werden die mit Y₂O₃ gemischten Platin-Pulver aus der oben beschriebenen Platin-Pulverherstellung in einer Kugelmühle vermahlen. Dieser Mahlvorgang führt zu einer ständigen weiteren Zerkleinerung und zum Wiederverschweißen der Pulverteilchen, wobei die Y₂O₃-Dispersoidteilchen einerseits selbst zerkleinert und andererseits regelmäßig im Platin-Pulver fein verteilt werden.

Die zum Mahlen verwendete Mühle besteht aus einem Platin-Gefäß, in das als Mahlkugeln Zirkoniumoxid-Kugeln gefüllt werden. Diese Vorgehensweise ist notwendig, da aus Stahl gebaute Kugelmühlen zu einer nicht akzeptablen Verunreinigung der Platin-Mahlprodukte mit Eisen führen würden. Es ist aber auch nicht möglich, rein keramische Mühlen zu verwenden. Beim Mahlung in einem Zirkoniumoxid-Mahlbehälter tritt ein hoher Abrieb von Zirkoniumoxid von der Behälterwand auf. Dieser würde zwar die Glasqualität nicht negativ beeinflussen. Da der Abrieb aber in Form von Teilchen über 1 µm in die Platin-Pulver eingemahlen wird, schädigt er die Plastizität der Platin-Halbzeuge erheblich.

Daher ist die oben beschriebene Vorgangsweise eines Mahlbehälters aus Platin und der Mahlkugeln aus Zirkoniumoxid zu wählen. Einerseits ist der Abrieb von den Zirkoniumoxid-Kugeln sehr gering und im Gegensatz zu dem Abrieb keramischer Gefäße sehr fein und damit für die Halbzeugeigenschaften nicht schädlich, zum anderen kann durch die gewählte Kombination aus keramischen Kugeln und dem Platin-Behälter die erforderliche Reinheit für optische Applikationen gewährleistet werden. Das derart erhaltene Mahlprodukt ist ein Platinpulver, in dem fein verteilt Y₂O₃-Teilchen eingelagert sind und das zur Weiterverarbeitung zu hochwarmfesten Platin-Halbzeugen bestens geeignet ist.

### Kompaktieren:

Nach dem Mahlen werden die Mahlprodukte in Platin-Kapseln gefüllt. Die Kapseln weisen einen Stutzen auf, an den eine Vakuumpumpe angeschlossen wird. Durch Anlegen eines Vakuums, bei gleichzeitiger Erwärmung der Kapsel werden die Gase entfernt, die evtl. während der Mahlung im Platin eingeschlossen wurden. Zur Entgasung sind Temperaturen von mindestens 1200 °C bei einer Wärmebehandlungsdauer bis zu 48 Stunden notwendig.
Unterbleibt diese Entgasungsbehandlung, so treten bei der Bauteilfertigung beim Fügen von dispersionsverfestigten Platin-Halbzeugen z. B. durch Schweißen an den Schweißnähten Gasporen auf, die zum Versagen der Konstruktion durch Schwächung der Schweißnaht führen können.
Nach dem Entgasen wird die evakuierte Kapsel gasdicht verschweißt und bei 1350 °C mit einem Druck von 200 MPa heiß isostatisch verdichtet. Dabei entsteht ein kompakter Werkstoff, der eine relative Dichte von 100 % der theoretischen aufweist. Der so hergestellte Werkstoff kann durch konventionelle Umformverfahren weiter verformt werden.

Nach der Erfindung werden als Dispersoide 0,2 - 0,6 Gew.-%, insbesondere 0,25 - 0,5 Gew.-% Y₂O₃ mit Teilchengrößen < 1 µm, insbesondere mit Teilchengrößen im Bereich von 20 nm dem Platin-Pulver zugemischt.
Das Y₂O₃ führt zu keiner Verfärbung der Gläser, wie es verfestigende Legierungselemente tun würden.
Da in dispersionsverfestigten Platin-Werkstoffen keine Bestandteile enthalten sind, die zur Beeinträchtigung der Glasqualität führen, sind sie für den Hochtemperatureinsatz in glasführenden Bauteilen bestens geeignet.

Maßgeblich für die Festigkeitseigenschaften und damit auch für die Betriebssicherheit beim Einsatz von dispersionsverfestigtem Platin in Konstruktionsbauteilen ist die Verteilung der Y₂O₃-Dispersoidteilchen in der Platin-Matrix. Gewünscht ist eine regelmäßige Anordnung feinster Teilchen. Die Größe dieser Y₂O₃-Dispersoidteilchen soll etwa 20 nm betragen und ihr Abstand in der Platin-Matrix zwischen 100 bis 600 nm, insbesondere zwischen 150 - 500 nm erreichen.
Sehr schädlich sind Dispersoid-Teilchenagglomerationen, die größer als 1 µm sind, da diese Agglomerationen die Plastizität bei hohen Temperaturen deutlich verringern. Damit ist dann die Betriebssicherheit des Bauteils nicht mehr gegeben.
Am Markt werden von verschiedenen Herstellern dispersionsverfestigte Platin-Werkstoffe angeboten, die allerdings bezüglich der Festigkeitseigenschaften nicht befriedigend sind. Die kommerziell angebotenen Werkstoffe weisen in den meisten Fällen Dispersoid-Teilchen-Agglomerationen auf, die größer als 1 µm sind. Dadurch sinken Festigkeit und Plastizität der Werkstoffe ganz erheblich und die Betriebssicherheit der daraus hergestellten Bauteile ist nicht mehr gegeben.

Nach der Erfindung erfolgt die Herstellung von Halbzeugen und Blechen aus dispersionsverfestigtem Platin durch Walzen der heißisostatisch verdichteten Blöcke.
Die Blöcke werden dabei bei einer Temperatur von 1200 °C angewalzt und bis zu einer Dickenabnahme von 40 - 50 % warmgewalzt.
Ein kaltes Anwalzen von dispersionsverfestigten Platinblöcken führt zur Entstehung von Walzfehlern im Inneren des Blocks, im schlimmsten Fall auch zum völligen Aufreißen des Halbzeugs.
Nach einer Warmstichabnahme von 50 % kann dann kalt weiterverformt werden. Kaltwalzen ist erwünscht, da die Oberflächenqualität und die Maßhaltigkeit der Bleche dabei wesentlich verbessert wird.

Verfährt man nach der vorliegenden Erfindung, erhält man ein dispersionsverfestigtes Platin bzw. daraus gefertigte Halbzeuge und Bleche mit einer Reinheit des Platins von mindestens 99,95 %, mit Zugfestigkeiten Rm zwischen 300 - 350 MPa, einer Dehnungsfähigkeit A von 15 - 25 % und einer Kornstabilität bis 1400 °C.

Die auf dem beschriebenen erfindungsgemäßen Weg hergestellten dispersionsverfestigten Platin-Werkstoffe und Platin-Halbzeuge erfüllen die Reinheitsanforderungen für Platin, das als Material für glasführende Konstruktionsteile bei der Herstellung optischer Gläser eingesetzt wird.

Die Platin-Pulverherstellung erfordert auch kein reines Ausgangsmaterial, da eine Raffination erfolgt. Es ist daher auch möglich, ein hochreines dispersionsverfestigtes Platin-Halbzeug durch Umarbeitung von Platin-Schrottposten zu gewinnen, die wegen ihrer Verunreinigungen sonst aus der Glasproduktion herausgenommen werden mußten.
Die Platin-Werkstoffe, die auf dem beschriebenen Weg hergestellt wurden, sind für den Hochtemperatureinsatz geeignet, da sie ihre Festigkeit bis zu Einsatztemperaturen von mindestens 1300 °C vollkommen beibehalten.

Aus den beschriebenen Eigenschaften ergeben sich durch das erfindungsgemäße Verfahren wesentliche technische Fortschritte und Vorteile:
- Es werden hochreine Platin-Werkstoffe hergestellt, die den Anforderungen bei der Herstellung optischer und technischer Gläser genügen.
- Es kann unlegiertes Platin in Konstruktionsbauteilen, die mit Temperaturen über 1300 °C beaufschlagt werden, eingesetzt werden. Dieser Bereich war bisher den Platin-Legierungen vorbehalten, die allerdings die Transmission der Gläser verschlechtern und zu Verfärbungen führen.
- Bauteile, die während des Einsatzes in glasführenden Bereichen Verunreinigungen aufgenommen haben, und die daher aus dem Produktionsbetrieb ausgeschieden werden mußten, brauchen nicht zur Scheidung gegeben werden. Sie können auf dem beschriebenen erfindungsgemäßen Weg in dispersionsverfestigte Rein-Platin-Halbzeuge umgearbeitet werden.
- Ausgeschiedene Bauteile aus dispersionsverfestigtem Platin können auf dem erfindungsgemäßen Weg ebenfalls wieder aufgearbeitet und zu neuen dispersionsverfestigten Rein-Platin-Halbzeugen umgearbeitet werden.
- Die dargestellte erfindungsgemäße pulvermetallurgische Verarbeitung zum Halbzeug garantiert, daß hochwertige Platin-Halbzeug hergestellt werden, die keine schädlichen, plastizitätsmindernde Einschlüsse enthalten. Darüber hinaus werden auf diesem erfindungsgemäßen Verarbeitungsweg Werkstoffe hergestellt, die deutlich höhere Festigkeit bei Hochtemperaturbeanspruchung aufweisen, als alle derzeit kommerziellen Produkte.
- Es gelingt die Temperaturgrenze für den Einsatz von Konstruktionsbauteilen mit einer Rein-Platin-Matrix von etwa 800 °C für unverstärktes Platin auf über 1300 °C für dispersionsverfestigtes Platin anzuheben. Dispersionsverfestigtes Platin, das auf die erfindungsgemäße Art hergestellt wurde, ist also durchaus geeignet, die Ptlr- bzw. PtRh-Legierungen zu ersetzten, was eine entscheidende Verbesserung der erschmolzenen Gläser zur Folge hat.

## Patentansprüche

1. Verfahren zur Herstellung von feinteiligem Platinpulver hoher Reinheit, zur Herstellung von dispersionsverfestigten Reinst-Platin-Werkstoffen hoher Festigkeit und Dehnungsfähigkeit auch im Temperaturbereich > 800°C,
**gekennzeichnet durch die Verfahrensschritte**
- Lösen des Platins in einem elektrolytischen Verfahren, insbesondere als salzsaure Lösung oder gelöst in siedendem Königswasser,
- Eindampfen dieser Lösung bis auf eine Konzentration von etwa 400 g Pt/l,
- vollständiges Entfernen der Stickoxide, insbesondere bei einem Aufschluß durch Königswasser durch mehrmalige, insbesondere 2malige Zugabe von Salzsäure,
- weiteres Einengen der Lösung bis zu einer Siedetemperatur von etwa 180 °C auf eine Platin-Konzentration von etwa 1500 g Pt/l.
- Aufnahme dieser heißen Lösung mit H₂O bis auf eine Konzentration von 600 g Pt/l,
- Zugeben der auf 80 °C temperierten und auf eine Konzentration von 150 - 200 g Pt/l eingestellten Platin-Lösung unter intensivem Rühren zu einer, in einer Fritte vorgelegten, ebenfalls auf 80 °C erwärmten 30 %-igen Ammonchlorid-Lösung mit 300 g NH₄Cl/l,
- Ausfällen des Platins als (NH₄)₂ [PtCl₆], dabei möglichst schnelles und vollständiges Absaugen der verbleibenden Reaktionsflüssigkeit,
- mehrmaliges, insbesondere 3maliges Auswaschen des Filterkuchens mit verdünnter, 15 %-iger, kalter NH₄Cl-Lösung, wobei der Filterkuchen solange nicht trockenfallen sollte, bis die Waschlösung farblos austritt, dann
- 15 min. lang weiteres Absaugen bei einem Niederdruck von 20 mbar, anschließend
- Entfernen des restlichen Wassers mit Aceton, solange bis das durchgesaugte Aceton milchig-trübe austritt,
- Trocknen durch weiteres Absaugen bei einem Niederdruck von 20 mbar, etwa 30 min. lang, anschließend
- thermisches Zersetzen in einem Ofen bei 380 - 420 °C,
- Zerstoßen des bei der thermischen Zersetzung entstandenen Platin-Schwammes zu feinem Pulver der Körnung von 1 - 5 µm, und
- mehrmaliges, insbesondere 4maliges Auskochen des pulverigen Platins mit destilliertem Wasser,
- Absaugen des Wassers und anschließendes
- Trocknen bei 100°C bis zur Gewichtskonstanz.

2. Verfahren zur Herstellung von mit Y₂O₃ dispersionsverfestigten Reinst-platin-Werkstoffen hoher Festigkeit und Dehnungsfähigkeit auch im Temperaturbereich > 800 °C aus Platinpulver hergestellt nach Anspruch 1, durch mechanisches Legieren,
**gekennzeichnet durch die Verfahrensschritte**
- Vorlegen des Platinpulvers hoher Reinheit in einer Korngröße von 2 bis 10 µm,
- Einbringen und Verteilen von Y₂O₃-Teilchen < 1 µm in das Platinpulver durch Vermahlen in einem Platingefäß mit Mahlkugeln aus Zirkoniumoxid,
- Entgasen des Mahlprodukts unter Vakuum von besser 10⁻³ mbar und unter Temperaturerhöhung auf mindestens 1200 °C in einer Platinkapsel für eine Dauer von bis zu 48 h,
- gasdichtes Verschweißen der evakuierten Kapsel und heißisostatisches Pressen bei 1350 °C und 200 MPa zu Blöcken, insbesondere zu Barren von kompakten dispersionsverfestigtem Platin, die eine relative Dichte von 100 % der theoretischen Dichte aufweisen.

3. Verfahren nach Anspruch 2,
**dadurch gekennzeichnet,**
daß als Dispersoide 0,2 - 0,6 Gew.-%, insbesondere 0,25 - 0,5 Gew.-% Y₂O₃ mit Teilchengrößen < 1 µm, insbesondere mit Teilchengrößen im Bereich von 20 nm dem Platinpulver zugemischt werden.

4. Verfahren zur Herstellung von Halbzeugen und Blechen aus dispersionsverfestigten Platinwerkstoffen, hergestellt nach einem der Ansprüche 2 und 3,
**dadurch gekennzeichnet,**
daß die heißisostatisch verdichteten Blöcke bis zu einer Dickenabnahme von 40 - 50 % bei einer Temperatur von 1200 °C heiß ausgewalzt werden und anschließend nach einer Warmstichabnahme von 50 % kalt weiterverformt, insbesondere zu Blechen ausgewalzt werden.

5. Aus dispersionsverfestigtem Platin nach einem der Ansprüche 2 und 3 gefertigte Halbzeuge und Bleche, hergestellt nach Anspruch 4,
**gekennzeichnet durch**
- eine Reinheit des Platins von mindestens 99.95 %,
- Zugfestigkeiten Rₘ zwischen 300 - 350 MPa,
- eine Dehnungsfähigkeit A von 15 - 25 % und eine Kornstabilität bis 1400 °C.

6. Halbzeuge und Bleche nach Anspruch 5,
**dadurch gekennzeichnet,**
daß der Abstand der Y₂O₃-Dispersoid-Teilchen untereinander in der Pt-Matrix zwischen 100 - 600 nm, insbesondere zwischen 150 - 500 nm beträgt.

## Claims

1. Process for preparing finely divided platinum powder of high purity, for producing dispersion-reinforced, very pure platinum materials having high strength and extensibility, even in the temperature range > 800°C, characterized by the process steps
- dissolving the platinum in an electrolytic process, in particular as a hydrochloric acid solution or dissolved in boiling aqua regia,
- evaporating this solution to a concentration of about 400 g Pt/l,
- completely removing the oxides of nitrogen, in particular in the case of digestion using aqua regia, by adding hydrochloric acid a plurality of times, in particular twice,
- further evaporation of the solution up to a boiling temperature of about 180°C to a platinum concentration of about 1500 g Pt/l
- taking up this hot solution with H₂O to a concentration of 600 g Pt/l,
- adding the platinum solution, adjusted to a temperature of 80°C and a concentration of 150-200 g Pt/l, with vigorous stirring to a 30 % strength ammonium chloride solution with 300 g NH₄Cl/l present in a frit and likewise heated to 80°C,
- precipitating the platinum as (NH₄)₂[PtCl₆] and completely removing the remaining reaction liquid as quickly as possible by means of suction,
- washing the filter cake a plurality of times, in particular three times, with dilute, 15 % strength, cold NH₄Cl solution, during which procedure the filter cake should not become dry until the washing solution emerges colourless, then
- applying suction for a further 15 minutes at a low pressure of 20 mbar, subsequently
- removing the residual water with acetone until the acetone sucked through emerges with a milky turbidity,
- drying by further application of suction at a low pressure of 20 mbar for about 30 minutes, subsequently
- thermal decomposition in a furnace at 380-420°C,
- pulverizing the platinum sponge formed in the thermal decomposition to give a fine powder having a particle size of 1 - 5 µm, and
- boiling the pulverulent platinum with distilled water a plurality of times, in particular 4 times,
- removing the water with suction and subsequently
- drying at 100°C to constant weight.

2. Process for producing very pure platinum materials dispersion-reinforced with Y₂O₃ and having high strength and extensibility, even in the temperature range > 800°C, from platinum powder prepared according to Claim 1, by mechanical alloying, characterized by the process steps
- providing platinum powder of high purity in a particle size of from 2 to 10 µm,
- introducing and dispersing Y₂O₃ particles < 1 µm in the platinum powder by milling in a platinum vessel using milling media of zirconium oxide,
- degassing the milled product under a vacuum of better than 10⁻³ mbar and with an increase in temperature to at least 1200°C in a platinum capsule for a period of up to 48 hours,
- gastight welding of the evacuated capsule and hot isostatic pressing at 1350°C and 200 MPa to give blocks, in particular bars, of compact dispersion-reinforced platinum which have a relative density of 100 % of the theoretical density.

3. Process according to Claim 2, characterized in that 0.2 - 0.6% by weight, in particular 0.25 - 0.5% by weight, of Y₂O₃ having particle sizes < 1 µm, in particular having particle sizes in the region of 20 nm, is mixed as dispersoid into the platinum powder.

4. Process for producing semi-finished parts and foils of dispersion-reinforced platinum materials produced according to either of Claims 2 and 3, characterized in that the hot isostatically pressed blocks are hot rolled at a temperature of 1200°C until the thickness has decreased by 40 - 50 % and are subsequently, after a hot reduction of 50 %, further formed cold, in particular rolled out to give foils.

5. Semi-finished parts and foils produced according to Claim 4 from dispersion-reinforced platinum according to either of Claims 2 and 3, characterized by
- a platinum purity of at least 99.95 %,
- tensile strengths Rₘ of 300 - 350 MPa,
- an extensibility A of 15 - 25 % and a
- grain stability up to 1400°C.

6. Semi-finished parts and foils according to Claim 5, characterized in that the spacing of the Y₂O₃ dispersoid particles in the Pt matrix is 100 - 600 nm, in particular 150 - 500 nm.

## Revendications

1. Procédé pour la préparation de poudre de platine finement divisée de pureté élevée, pour la préparation de matériaux en platine ultra pur durcis par le procédé à phase dispersée, à résistance et à capacité de dilatation élevées, même dans le domaine de températures > 800°C, caractérisé par les étapes de procédé
- dissolution du platine dans un procédé électrolytique, en particulier en tant que solution dans l'acide chlorhydrique ou dissous dans l'eau régale bouillante,
- concentration par évaporation de cette solution jusqu'à une concentration d'environ 400 g de Pt/litre,
- élimination complète des oxydes d'azote, en particulier dans le cas d'une dissolution à l'aide d'eau régale, grâce à une addition à plusieurs reprises, en particulier à 2 reprises, d'acide chlorhydrique,
- concentration supplémentaire de la solution jusqu'à une température d'ébullition d'environ 180°C à une concentration en platine d'environ 1500 g de Pt/litre,
- reprise de cette solution chaude à l'aide de H₂O jusqu'à une concentration de 600 g Pt/litre,
- addition de la solution de platine conditionnée à 80°C et ajustée à une concentration de 150-200 g de Pt/litre avec agitation vigoureuse pour former, avec 300 g de NH₄Cl/litre, une solution de chlorure d'ammonium à 30%, placée dans une fritte, également chauffée à 80°C,
- précipitation du platine en tant que (NH₄)₂[PtCl₆], en l'occurrence avec une filtration à vide par aspiration la plus rapide et la plus complète possible du liquide de réaction restant,
- lavage à plusieurs reprises, en particulier à 3 reprises, du gâteau de filtre, à l'aide d'une solution froide de NH₄Cl, diluée à 15%, le gâteau de filtre ne devant se dessécher qu'une fois la solution de lavage devenue incolore à la sortie, puis
- filtration par aspiration supplémentaire d'une durée de 15 minutes sous une pression réduite de 20 mbars, ensuite
- élimination de l'eau restante à l'aide d'acétone, jusqu'à ce que l'acétone aspirée au travers ressorte en présentant un aspect laiteux trouble,
- séchage par aspiration supplémentaire à une dépression de 20 mbars, pendant environ 30 minutes, ensuite
- décomposition thermique dans un four à 380 - 420°C,
- broyage de l'éponge de platine formée lors de la décomposition thermique pour former une poudre fine ayant une granulométrie de 1 - 5 microns, et
- extraction par cuisson à plusieurs reprises, en particulier à 4 reprises, du platine pulvérulent à l'aide d'eau distillée,
- filtration par aspiration de l'eau et
- séchage subséquent à 100°C jusqu'à l'obtention d'un poids constant.

2. Procédé de préparation de matériaux en platine ultra pur, durcis à l'aide de Y₂O₃ par le procédé à phase dispersée, à résistance et à capacité de dilatation élevées, même dans le domaine de températures > 800°C, fabriqués à partir de poudre de platine selon la revendication 1, par alliage par voie mécanique, caractérisé par les étapes de procédé
- mise en place de la poudre de platine de pureté élevée à une granulométrie allant de 2 à 10 microns,
- introduction et répartition de particules de Y₂O₃ < 1 micron dans la poudre de platine par mouture dans un récipient en platine à l'aide de billes de mouture en oxyde de zirconium,
- dégazage du produit moulu sous un vide allant à mieux de 10⁻³ bars et pour une élévation de température à au moins 1200°C dans une capsule de platine pendant une durée allant jusqu'à 48 heures,
- soudage étanche aux gaz de la capsule mise sous-vide et compression isostatique à chaud à 1350°C et 200 MPa pour former des blocs, en particulier des barres en platine compact, durci par le procédé à phase dispersée, qui présentent une densité relative de 100% de la densité théorique.

3. Procédé selon la revendication 2, caractérisé en ce que l'on mélange à la poudre de platine, en tant que dispersoïdes, 0,2 - 0,6 % en poids, en particulier 0,25 - 0,5 % en poids de Y₂O₃ ayant des grosseurs de particules < 1 micron, en particulier des grosseurs de particule dans le domaine de 20 nm.

4. Procédé de préparation de produits semi-finis et de tôles en matériaux de platine durcis par le procédé à phase dispersée, fabriqués selon l'une quelconque des revendications 2 et 3, caractérisé en ce que les blocs condensés par voie isostatique à chaud sont laminés à chaud jusqu'à une réduction d'épaisseur de 40 - 50 % à une température de 1200°C et sont ensuite déformés ultérieurement à froid après une réduction sous l'effet de la chaleur de 50 %, en particulier par laminage pour former des tôles.

5. Produits semi-finis et tôles en platine durci par le procédé à phase dispersée selon l'une quelconque des revendications 2 et 3, fabriqués selon la revendication 4, caractérisés par
- une pureté du platine d'au moins 99,95%,
- des résistances à la traction Rₘ comprises entre 300 et 350 MPa,
- une capacité de dilatation A de 15 - 25% et une stabilité de grains allant jusqu'à 1400°C.

6. Produits semi-finis et tôles selon la revendication 5, caractérisés en ce que la distance des particules de dispersoïde Y₂O₃ les unes par rapport aux autres est comprise entre 100 et 600 nm, en particulier entre 150 et 500 nm.
